# EUROPEAN PATENT SPECIFICATION

(11) **EP 2 098 767 B1**
(45) Date of publication and mention of the grant of the patent: **29.09.2010**
(21) Application number: 09380039.9
(22) Date of filing: 02.03.2009
(51) Int. Cl.: F16L 1/036, F16L 1/09

(54) **Device for assembling pipes**
Vorrichtung zum Zusammenbauen von Rohren
Dispositif pour assembler des tuyaux

(30) Priority: 08.03.2008 ES 200800491
(43) Date of publication of application: 09.09.2009
(73) Proprietor: Excavadoras de Totana SL, 30850 Totana (ES)
(72) Inventor: Serrano Ruiz, D. Roman, 30850 Totana (Murcia) (ES)
(74) Representative: Pons Ariño, Angel

(56) References cited:
- DE-A1- 3 610 836
- DE-A1-102005 005 233
- DE-U1- 8 914 321
- DE-U1-202006 003 138
- FR-A1- 2 450 671

## Description

### Object of the Invention

The present invention relates to a device for assembling pipes, providing essential novelty features and considerable advantages with respect to the means known and used for the same purposes in the current state of the art. A device for assembling pipes according to the preamble of claim 1 is known from DE 36 10 836 A1.

More particularly, the invention proposes developing a device which, having a simple design and being easy to make, provides utilities related to assembling pipes which allows a quick and simple assembly of pipe sections by means of previously aligning them and moving one pipe section closer to another for the tongue and groove assembly thereof.

The field of application of the invention is obviously comprised within the industrial sector related to carrying out public works in general, and more particularly to the laying of supply and sanitation conduits.

### Background and Summary of the Invention

The fact that fluids are formally driven between remote positions, either for supply purposes or for sanitation purposes, with the aid of pipes the features of which depend basically on the type of fluid that they will support is generally known by all. This is the case of, for example, water supply, the conduits for draining water and other sewage and waste liquids, etc. A conduit of this type is generally formed by a plurality of individual pipe sections, with a general cylindrical shape, the diameter of which depends on the volume of fluid which is expected to circulate therein, each section being configure at one of its ends such that it has a flaring sufficient to receive and house a portion of the other respective end of a contiguous adjacent pipe section, such that a tongue and groove assembly is formed between the flared end portion, with a larger diameter, of one of the pipe sections and the non-flared portion of the contiguous pipe section. The attachment is normally sealed with the use of some type of gasket, for the purpose of making it hermetic and preventing unwanted leaks and escapes.

However, given that individual pipe sections are normally rather heavy elements, especially when their dimensional features are above a pre-determined diameter, it is frequently necessary to use certain types of machines which are in charge of moving the pipe sections and positioning them one after the other. The coupling is usually a tedious and difficult operation, which normally requires the intervention of an operator and is not completely risk-free.

Taking into consideration the drawbacks associated to this type of operations of assembly between contiguous pipe sections, the main objective of the present invention is to create a device with which effective solutions are provided for these problems present in the current state of the art. This objective has been fully achieved by means of the device which will be the object of the description below, and the main features of which are included in the characterizing portion of the attached claim 1.

The device proposed by the invention is essentially formed by a double acting cylinder assembled in a platform supported by a public works machine or the like, secured to a plate with free rotation with respect to its vertical axis, allowing the self-alignment of each tube with the previous one regardless of the angle formed by the tube with the arm of the machine keeping it suspended. The device includes two hooks, one at each end of the cylinder, intended to respectively secure one chain on each side which in turn, by means of a pair of slings respectively associated to both chains and embracing the tips of the tubes to be assembled, allow moving a tube closer to the inside by the retraction of the mechanical arm of the cylinder, and thus the coupling therebetween. The hydraulic force exerted by the cylinder allows overcoming the resistance offered by the tubes to be assembled to one another, simplifying the operations and considerably shortening the assembling time.

### Brief Description of the Drawings

These and other advantageous features of the invention will be more clearly shown from the following detailed description of a preferred embodiment thereof, given only as an illustrative example with no limiting character whatsoever, considered together with the attached drawings, in which:
Figure 1 shows a schematic view of the device of the invention, in the approaching position prior to the assembly of two pipe portions, and
Figure 2 schematically shows the device of the invention in a state of assembly of both contiguous pipe sections.

### Description of a Preferred Embodiment

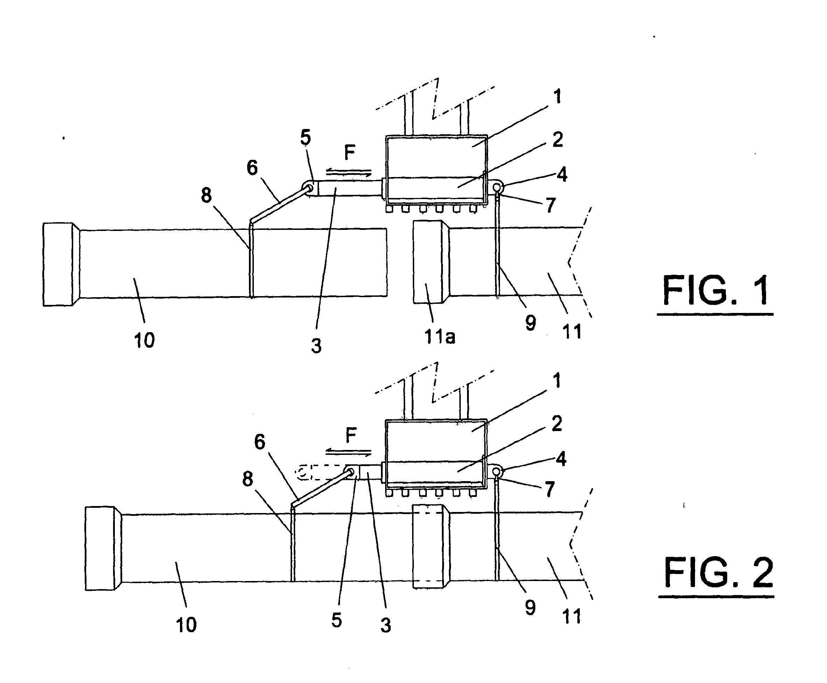

As has been mentioned above, the detailed description of the preferred embodiment of the device of the invention will be made below with the aid of the attached drawings, through which the same reference numbers are used to designate identical or similar parts. Thus, considering both Figures 1 and 2 contained in the drawings, it can be observed that the device of the invention, with which the operations of assembly of contiguous pipe sections can be considerably simplified and sped up, has a simple design and is inexpensively constructed. The device of Figure 1 essentially comprises a base 1 which is suspended from a machine of any suitable type for this type of work, inside which there is arranged a double acting hydraulic cylinder, indicated in the drawings by means of reference number 2, provided with an extensible and retractable rod 3, as is intended to be indicated by means of the double arrow "F". This cylinder 2 is assembled on a self-alignment rotating plate (not visible in the figures) and includes two hooking elements associated to each of its respective ends, indicated by means of reference numbers 4 and 5, to which respective chains 6 and 7 are hooked, each of which supports a respective sling 8, 9, and each sling supports a respective tube section 10, 11, with the adjacent ends in mutually opposite positions.

As can be observed in the depiction of Figure 1, the cylinder 2 appears with the arm 3 in an extended position, thus keeping the tube section 10 separated from the tube section 11, although as has been said, in a mutually opposite relation. When the actuation on the cylinder 2 determines the retraction of said rod 3 to the position shown in Figure 2, the pulling of the tube section 10 in a direction towards the tube section 11 determines the tongue and groove coupling between both contiguous ends as a result of the flared end portion 11a which each tube has at a coupling end.

As will be understood, the coupling operation is carried out simply and quickly as a result of the device which has just been described. Furthermore, the cylinder 2 can be fed directly from the hydraulic circuit of the actual machine in which it is incorporated, from any output of said circuit. The hydraulic cylinder can additionally be of any type and model, provided that it is enabled to support the stress to which it will be subjected.

It is not considered necessary to extend the content of the present description for a person skilled in the art to be able to understand its scope and the advantages derived therefrom, as well to put its object into practice.

Despite the foregoing, and given that the description made corresponds only to a preferred embodiment, multiple likewise protected variations of detail may be introduced within its essence, which could affect aspects such as the size, the shape or the construction materials of the assembly or of its parts, the type of hydraulic cylinder used, or any others which do not involve departing from the scope of the invention.

## Claims

1. A device for assembling pipes, especially indicated for the assembly of individual contiguous cylindrical pipe sections (10, 11) by the mutual coupling of the adjacent ends of two contiguous sections as a result of the tongue and groove attachment provided by the formation of a portion (11a) with a larger diameter formed at one end of each tube and in which the respectively opposite end of the next tube is received, **characterized in that** the device comprises a base (1) supporting a hydraulic cylinder (2) assembled on a plate with free rotation with respect to its vertical axis for the purpose of the self-alignment of the tubes, which hydraulic cylinder (2) comprises two hooking elements (4, 5) respectively linked to each of the opposite ends of the cylinder, and from which respective portions of chains (6, 7) respectively supporting slings (8, 9) extend, each of these slings supporting a pipe section (10, 11), and the retraction of the rod (3) of the hydraulic cylinder (2) being the one determining the movement of a pipe section (10) closer to the previous section (11), with the consequent coupling of their adjacent ends.

## Patentansprüche

1. Eine Vorrichtung zur Montage von Rohrleitungen, welche vor allem für die Montage von individuellen, angrenzenden, zylinderförmigen Rohrabschnitten (10, 11) mittels der gegenseitigen Ankoppelung von nebeneinander liegenden Enden von zwei angrenzenden Abschnitten als Ergebnis der Feder- und Nutbefestigung angezeigt ist, welche durch die Bildung eines Teils (11a) mit einem größeren Durchmesser zur Verfügung gestellt wird, der an einem Ende jedes Rohrs vorgesehen ist und in dem das jeweilige gegenüberliegende Ende des nächsten Rohrs aufgenommen wird, **dadurch gekennzeichnet, dass** die Vorrichtung eine Grundlage (1) umfasst, welche einen Hydraulikzylinder (2) stützt, der zwecks der Selbstausrichtung der Rohre auf einer sich hinsichtlich dessen vertikaler Achse frei drehenden Platte montiert ist, wobei der Hydraulikzylinder (2) zwei Einhängeelemente (4, 5) umfasst, welche jeweils mit jedem der gegenüberliegenden Enden des Zylinders verbunden sind, und von denen sich jeweilige Kettenabschnitte (6, 7) erstrecken, die entsprechende Schlingen (8, 9) tragen, wobei jede dieser Schlingen einen Rohrabschnitt (10, 11) trägt, und wobei die Zurückziehung der Kurbelstange (3) des Hydraulikzylinders (2) diejenige ist, welche die Bewegung eines Rohrabschnitts (10) näher an den vorherigen Abschnitt (11) bestimmt, mit der folgenden Ankoppelung deren angrenzenden Enden.

## Revendications

1. Un appareil pour assembler des tuyaux, spécialement indiqué pour l'assemblage de sections (10, 11) séparées, contiguës de tuyau cylindrique par le couplage mutuel des extrémités adjacentes de deux sections contiguës résultant du dispositif de languette et fente fourni par la formation d'une portion (11a) de plus grand diamètre formée à une extrémité de chaque tube et dans laquelle l'extrémité opposée respective du tube suivant est reçue, **caractérisé en ce que** l'appareil comprend une base (1) soutenant un cylindre hydraulique (2) assemblé sur une plaque avec rotation libre par rapport à son axe vertical en vue de l'auto-alignement des tubes, ledit cylindre hydraulique (2) comprend deux éléments d'accrochage (4, 5) respectivement reliés à chacune des extrémités opposées du cylindre, et à partir desquels les portions de chaîne respectives (6, 7) soutenant respectivement des élingues (8, 9) se prolongent, chacune de ces élingues soutenant une section de tuyau (10, 11), et la rétraction de la tige (3) du cylindre hydraulique (2) étant celle qui détermine le mouvement de rapprochement d'une section de tuyau (10) vers la section précédente (11), avec le couplage de leurs extrémités adjacentes qui en résulte.
